# EUROPEAN PATENT SPECIFICATION

(11) **EP 3 597 408 B1**
(45) Date of publication and mention of the grant of the patent: **18.09.2024**
(21) Application number: 18767374.4
(22) Date of filing: 05.03.2018
(51) Int. Cl.: B29C 65/02, B29C 65/16, B29C 65/44, B29C 65/82, B29C 65/06, B29C 65/08, B29C 65/18

(54) **BONDED COMPOSITE OF THERMOPLASTIC-RESIN-BASED FIBER-REINFORCED COMPOSITE MATERIAL AND METAL MEMBER, AND METHOD FOR PRODUCING BONDED COMPOSITE**
VERBUNDENER VERBUNDSTOFF AUS THERMOPLASTISCHEM FASERVERSTÄRKTEM VERBUNDSTOFFMATERIAL UND METALLELEMENT UND VERFAHREN ZUR HERSTELLUNG EINES VERBUNDENEN VERBUNDSTOFFS
COMPOSITE LIÉ DE MATÉRIAU COMPOSITE RENFORCÉ DE FIBRES À BASE DE RÉSINE THERMOPLASTIQUE ET ÉLÉMENT MÉTALLIQUE, ET PROCÉDÉ DE PRODUCTION D'UN COMPOSITE LIÉ

(30) Priority: 16.03.2017 JP 2017050673
(43) Date of publication of application: 22.01.2020
(73) Proprietor: Kaneka Corporation, Osaka-shi, Osaka 530-8288 (JP)
(72) Inventor: FURUKAWA, Yoshio, Settsu-shi Osaka 566-0072 (JP); IWAHARA, Takahisa, Settsu-shi Osaka 566-0072 (JP); NODA, Yasushi, Settsu-shi Osaka 566-0072 (JP); URAKAMI, Masanobu, Settsu-shi Osaka 566-0072 (JP)
(74) Representative: Hoffmann Eitle
(86) International application number: PCT/JP2018/008406
(87) International publication number: WO 2018/168554

(56) References cited:
- JP-A- 2010 253 769
- JP-A- 2011 137 077
- JP-A- 2014 159 125
- JP-A- 2015 080 884
- JP-A- 2016 034 734
- JP-A- 2016 034 734
- JP-A- S61 148 027
- US-A1- 2016 325 488
- FU S-Y ET AL: "Tensile properties of short-glass-fiber- and short-carbon-fiber-reinforced polypropylene composites", COMPOSITES PART A: APPLIED SCIENCE AND MANUFACTURING, ELSEVIER, AMSTERDAM, NL, vol. 31, no. 10, 1 October 2000 (2000-10-01), pages 1117 - 1125, XP004214185, ISSN: 1359-835X, DOI: 10.1016/S1359-835X(00)00068-3

## Description

### Technical Field

The present invention relates to a composite in which a thermoplastic resin-based fiber-reinforced composite material and a metal member are joined to each other, and further relates to a method of producing such a composite.

### Background Art

A fiber-reinforced composite material containing a thermosetting resin as a matrix (base material) has excellent mechanical properties. As such, such a fiber-reinforced composite material has been used in a wide range of fields, for example, in the fields of sports goods (such as golf clubs, tennis rackets, and fishing rods), structural materials (such as aircrafts and vehicles), and reinforcement of concrete structures. Advantageously, a fiber-reinforced composite material containing a thermosetting resin allows integral molding of a large-sized component having a complicated shape. However, such a fiber-reinforced composite material takes several hours to cure. Therefore, as compared with a plastic material which is subjected to injection molding, the fiber-reinforced composite material is not suitable for a case where a small-sized and complicatedly-shaped component or structure for a home electric appliance, an electronic device, or the like, which component or structure needs to have a thin wall, a lightweight property, rigidity, and mass-productivity, is produced by a single molding step. Meanwhile, a fiber-reinforced composite material containing a thermoplastic resin is obtained by (i) impregnating reinforcing fibers with the thermoplastic resin in a softened state or in a molten state, (ii) imparting a final shape to a product thus obtained, and (iii) cooling and solidifying the product. These composite materials are each produced by, for example, a method including two steps of (i) preparing, in advance, a molded product which is in the form of pellets and in which discontinuous reinforcing fibers are mixed, by injection molding or extrusion molding disclosed in Patent Literatures 1 through 3, or a molded product which is in the form of a consolidated sheet (stampable sheet) or a tape and in which discontinuous or continuous reinforcing fibers are partially bonded to each other with use of a thermoplastic resin and (ii) subjecting such a molded product to press molding so that the molded product has a given shape.

A polyolefin-based resin, typified by, for example, a polypropylene-based resin, is an example of the thermoplastic resin. Since a polyolefin-based resin is excellent in moldability, rigidity, heat resistance, chemical resistance, electrical insulating property, and the like and is also inexpensive, it is used for general purposes in a wide range, such as films, fibers, and other variously shaped molded products. However, a polypropylene-based material is disadvantageously low in adhesiveness to different types of materials, such as metal members and reinforcing fibers, because it is a polymer material which does not have a polar group in its molecule (i.e., nonpolar) and is extremely inactive, as well as high in crystallinity and significantly low in solubility in solvents.

Reinforcing fibers used for a fiber-reinforced composite material as described above have high strength and a high elastic modulus. However, in a case where a composite material of reinforcing fibers and a polyolefin-based resin is prepared, there is the following problem. That is, since wettability of reinforcing fibers with polyolefin in a molten state is low during impregnation of the reinforcing fibers with the polyolefin, a void or a non-impregnated part is likely to form in a produced composite material. Accordingly, high adhesiveness has been desired between reinforcing fibers and a thermoplastic resin (matrix resin) so that excellent mechanical properties are achieved.

For that reason, as disclosed in Patent Literatures 4 through 6, there are methods of enhancing wettability by introducing a functional group to a surface of reinforcing fibers by a plasma treatment, an ozone treatment, a corona treatment, or a chemical etching treatment so that chemical bonding is strengthened, or by applying a sizing agent suited for a polyolefin resin, or by pulverizing a polyolefin resin. However, these methods have, for example, the following problems. That is, the increased number of steps results in an increase in production cost, and reinforcing fibers themselves are damaged.

Furthermore, a method of producing a modified resin by graft polymerization of a polyolefin-based resin and a polymerizable monomer having a polar functional group has been numerously tried. Example of such a modified resin include a modified polyolefin resin produced by melt-kneading a polyolefin resin and a polar monomer, such as maleic anhydride, as disclosed in Patent Literatures 7 through 10. Patent Literature 11 discloses a fiber-reinforced composite material composed of a modified polyolefin-based resin and carbon fibers. However, Patent Literature 11 does not describe the fiber-reinforced composite material and a specific method of or requirement for preparing the fiber-reinforced composite material and a metal member. Therefore, disclosure of Patent Literature 11 is not sufficient. Furthermore, although Patent Literatures 12 through 14 each disclose a fiber-reinforced composite material containing a thermoplastic resin or a method of joining a thermoplastic resin and a metal member to each other, usable forms of reinforcing fibers are limited or the increased number of steps are required because it is essential to perform a treatment of making the metal member uneven in advance. Therefore, the techniques disclosed in Patent Literatures 12 through 14 are not sufficient.

Patent Literature 17 describes a laminated body of a metallic material using modified polyolefin resin having heat resistance and excellent bonding performance with respect to a metallic material as a bonding layer. The laminated body comes into contact with at least two formed bodies comprising (A) the metallic material, and the bonding layer is formed by (B) an adherent resin composition including the modified polyolefin resin obtained by melting and kneading (b-2) unsaturated carboxylic acid or its anhydride monomer, (b-3) aromatic vinyl monomer and (b-4) radical initiator with respect to (b-1) polyolefin resin and having 0.01-50 wt.% of use amount of the (b-2) unsaturated carboxylic acid or its anhydride monomer with respect to the total 100 wt.% of the (b-1) polyolefin resin, (b-2) unsaturated carboxylic acid or its anhydride monomer and (b-3) aromatic vinyl monomer.

Patent Literature 18 describes the thermal pressure joining of a metal member to a resin member, wherein a metal member and a resin member are stacked one on the other, a press member applies heat and pressure locally on the metal member to soften and melt the resin member, the resin member is then solidified, the press member is pressed into the metal member to a depth shallower than a joint boundary between the metal and resin members to deform a portion of the metal member directly under the press member such that the portion protrudes toward the resin member, and resin melted on a surface of the resin member in a region of the joint boundary directly under the press member flows to an outer periphery of the region.

### Citation List

### [Patent Literature]

[Patent Literature 1]
   Japanese Patent Application Publication Tokukai No. 2005-125581
[Patent Literature 2]
   Japanese Patent Application Publication Tokukai No. 2005-97388
[Patent Literature 3]
   Japanese Patent Application Publication, Tokukaihei, No. 5-112657
[Patent Literature 4]
   Japanese Patent Application Publication Tokukai No. 2003-073932
[Patent Literature 5]
   Japanese Patent Application Publication Tokukai No. 2003-128799
[Patent Literature 6]
   Japanese Patent Application Publication Tokukai No. 2005-213679
[Patent Literature 7]
   Japanese Patent Application Publication Tokukai No. 2005-213478
[Patent Literature 8]
   Japanese Patent Application Publication, Tokukaihei, No. 1-236214
[Patent Literature 9]
   Japanese Patent Application Publication, Tokukaihei, No. 5-209025
[Patent Literature 10]
   Japanese Patent Application Publication Tokukai No. 2009-286964
[Patent Literature 11]
   PCT international application publication No. WO2011/064994
[Patent Literature 12]
   Japanese Patent Application Publication Tokukai No. 2015-183101
[Patent Literature 13]
   Japanese Patent Application Publication Tokukai No. 2016-027189
[Patent Literature 14]
   Japanese Patent Application Publication Tokukai No. 2016-034734
[Patent Literature 15]
   Japanese Patent Application Publication, Tokukaisho, No. 58-29651
[Patent Literature 16]
   Japanese Patent Application Publication, Tokukaisho, No. 64-79235
[Patent Literature 17]
   Japanese Patent Application Publication Tokukai No. 2010-253769
[Patent Literature 18]
   US Application No. 2016/0325488 A1

### Summary of Invention

### Technical Problem

An object of an aspect of the present invention is to provide a composite in which a fiber-reinforced composite material, composed of reinforcing fibers and a resin composition that contains (A) a polypropylene-based resin and (B) a modified polyolefin-based resin, has sufficient mechanical strength and is sufficiently strongly joined to a metal member without use of an intermediate material such as an adhesive agent. An object of another aspect of the present invention is to provide a method of producing such a composite.

### Solution to Problem

The inventors of the present invention conducted diligent studies in order to attain the above objects, and consequently completed the present invention. That is, the present invention encompasses the following features.

A composite including:
(I) a fiber-reinforced composite material which is composed of reinforcing fibers and a resin composition that contains (A) a polypropylene-based resin and (B) a modified polyolefin-based resin; and
(II) a metal member which is joined and fixed to (I) the fiber-reinforced composite material by welding,
   (A) the polypropylene-based resin having a tensile modulus of not less than 1 GPa,
   (B) the modified polyolefin-based resin being modified with (b) at least one kind of monomer which is selected from the group consisting of carboxylic acid group-containing vinyl monomers and epoxy group-containing vinyl monomers, and modified with a conjugated diene compound in an amount of 0.01 parts by weight to 10 parts by weight with respect to 100 parts by weight of the polyolefin-based resin,

a weight ratio (A):(B) between (A) the polypropylene-based resin and (B) the modified polyolefin-based resin in the resin composition being 90:10 to 40:60, and
the arithmetic average roughness, Ra, of a surface of (II) the metal member to which surface (I) the fiber-reinforced composite material is joined is 0.08 pm to 1 pm.

A method of producing a composite including (I) a fiber-reinforced composite material which is composed of reinforcing fibers and a resin composition that contains (A) a polypropylene-based resin and (B) a modified polyolefin-based resin and (II) a metal member which is joined and fixed to (I) the fiber-reinforced composite material,
the method comprising the step of joining (I) the fiber-reinforced composite material and (II) the metal member to each other by heat pressure bonding (pressing) or laser welding,
the composite being arranged such that:
   (A) the polypropylene-based resin has a tensile modulus of not less than 1 GPa;
   (B) the modified polyolefin-based resin is modified with at least one kind of monomer which is selected from the group consisting of carboxylic acid group-containing vinyl monomers and epoxy group-containing vinyl monomers and with a conjugated diene compound in an amount of 0.01 parts by weight to 10 parts by weight with respect to 100 parts by weight of the polyolefin-based resin; and
a weight ratio (A):(B) between (A) the polypropylene-based resin and (B) the modified polyolefin-based resin in the resin composition is 90:10 to 40:60, and
the arithmetic average roughness, Ra, of a surface of (II) the metal member to which surface (I) the fiber-reinforced composite material is joined is 0.08 pm to 1 pm.

### Advantageous Effects of Invention

According to the present invention, it is possible to obtain a composite in which a fiber-reinforced composite material, composed of reinforcing fibers and a resin composition that contains (A) a polypropylene-based resin and (B) a modified polyolefin-based resin, has sufficient mechanical strength and is sufficiently strongly joined to a metal member by welding without use of an intermediate material such as an adhesive agent. Furthermore, it is possible to reduce the number of steps, because it is not necessary to perform a pretreatment such as a treatment of making the metal member uneven in advance.

### Brief Description of Drawings

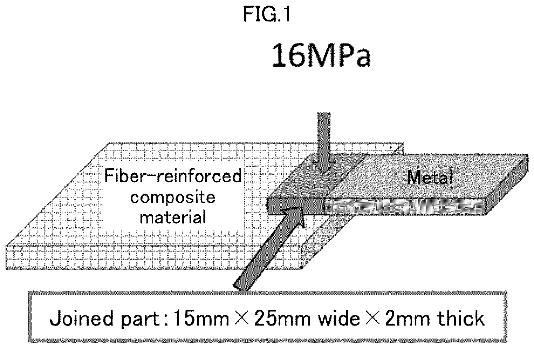

Fig. 1 is a schematic view of a composite of a fiber-reinforced composite material and a metal member.

### Description of Embodiments

The following description will discuss an embodiment of the present invention in detail.

### <(A) Polypropylene-based resin>

Examples of (A) a polypropylene-based resin used in an embodiment of the present invention include a propylene homopolymer, ethylene-propylene random copolymers, ethylene-propylene block copolymers, copolymers of propylene and the other olefins (for example, 1-butene, 1-hexene, and 4-methyl-1-pentene), copolymers of propylene and ethylene propylene. Out of those polypropylene-based resins, a propylene homopolymer, ethylene-propylene random copolymers, and ethylene-propylene block copolymers are preferable, because, for example, each of them has excellently balanced physical properties, each of them comes in various types with easy availability, and each of them is inexpensive. Particularly, ethylene-propylene block copolymers are preferable. Each of those polypropylene-based resins can be used solely or two or more of those polypropylene-based resins can be used in combination.

(A) The polypropylene-based resin has a tensile modulus of not less than 1 GPa and less than 5.0 GPa, preferably not less than 1 GPa and less than 3.0 GPa, and not less than 1.2 GPa and less than 2.0 GPa, at 23°C. In a case where (A) the polypropylene-based resin has a tensile modulus of less than 1 GPa, mechanical strength, such as an elastic modulus and strength, of a resultant fiber-reinforced composite material tends to become low. In a case where (A) the polypropylene-based resin has a tensile modulus of not less than 5.0 GPa, joining strength with which the fiber-reinforced composite material is joined to a metal member tends to become low.

### <(B) Modified polyolefin-based resin>

(B) A modified polyolefin-based resin is obtained by reacting (a) a polyolefin-based resin, (b) at least one kind of monomer which is selected from the group consisting of carboxylic acid group-containing vinyl monomers and epoxy group-containing vinyl monomers, and, optionally, (c) any other monomer such as an aromatic vinyl compound and a conjugated diene-based compound, under the presence of (d) a radical polymerization initiator.

### <(a) Polyolefin-based resin>

(a) The polyolefin-based resin used in an embodiment of the present invention is not limited to any particular one, and various kinds of polyolefin-based resins can be used. Examples of (a) the polyolefin-based resin include: polyethylene; polypropylene; poly-1-butene; polyisobutylene; random copolymers and block copolymers of propylene, ethylene, and/or 1-butene at any ratios; ethylene-propylene-diene terpolymers containing ethylene and propylene at any ratios and, at the any ratios, containing not more than 50% by weight of a diene component; polymethylpentene; cyclic polyolefins such as copolymers of cyclopentadiene and ethylene and/or propylene; random copolymers and block copolymers of ethylene or propylene and not more than 50% by weight of a vinyl compound or the like; copolymers of ethylene or α-olefin and a vinyl monomer, such as ethylene/vinyl chloride copolymers, ethylene/vinylidene chloride copolymers, ethylene/acrylonitrile copolymers, ethylene/methacrylonitrile copolymers, ethylene/vinyl acetate copolymers, ethylene/acrylamide copolymers, ethylene/methacrylamide copolymers, ethylene/acrylic acid copolymers, ethylene/methacrylic acid copolymers, ethylene/maleic acid copolymers, ethylene/methyl acrylate copolymers, ethylene/ethyl acrylate copolymers, ethylene/isopropyl acrylate copolymers, ethylene/butyl acrylate copolymers, ethylene/isobutyl acrylate copolymers, ethylene/2-ethylhexyl acrylate copolymers, ethylene/methyl methacrylate copolymers, ethylene/ethyl methacrylate copolymers, ethylene/isopropyl methacrylate copolymers, ethylene/butyl methacrylate copolymers, ethylene/isobutyl methacrylate copolymers, ethylene/2-ethylhexyl methacrylate copolymers, ethylene/maleic anhydride copolymers, ethylene/ethyl acrylate/maleic anhydride copolymers, ethylene/metal acrylate copolymers, ethylene/metal methacrylate copolymers, ethylene/vinyl acetate copolymers or saponified products thereof, ethylene/vinyl propionate copolymers, ethylene/glycidyl methacrylate copolymers, ethylene/ethyl acrylate/glycidyl methacrylate copolymers, and ethylene/vinyl acetate/glycidyl methacrylate copolymers; and chlorinated polyolefins such as chlorinated polypropylene and chlorinated polyethylene.

As (a) the polyolefin-based resin, a propylene homopolymer, ethylene-propylene random copolymers, and ethylene-propylene block copolymers are preferable, because each of them has excellently balanced physical properties, each of them comes in various types with easy availability, and each of them is inexpensive. Particularly, a propylene homopolymer is preferable. Each of those polypropylene-based resins can be used solely or two or more of those polypropylene-based resins can be used in combination.

### <(b) At least one kind of monomer which is selected from the group consisting of carboxylic acid group-containing vinyl monomers and epoxy group-containing vinyl monomers>

The carboxylic acid group-containing vinyl monomers can be carboxylic acids, acid anhydrides and derivatives thereof, and the like. Examples of the carboxylic acid group-containing vinyl monomers include unsaturated carboxylic acids, such as acrylic acid, methacrylic acid, maleic acid, fumaric acid, tetrahydrophthalic acid, itaconic acid, citraconic acid, crotonic acid, isocrotonic acid, norbornenedicarboxylic acid, and bicyclo[2,2,1]hept-2-ene-5,6-dicarboxylic acid, acid anhydrides thereof, and derivatives thereof (e.g., acid halides, amides, imides, esters). Specific examples of such compounds include maleic anhydride, itaconic anhydride, citraconic anhydride, tetrahydrophthalic anhydride, and bicyclo[2,2,1]hept-2-ene-5,6-dioarboxylic anhydride. Of those compounds, acrylic acid, methacrylic acid, and maleic anhydride are preferable. Each of those monomers can be used solely or two or more of those monomers can be used in combination.

Examples of the epoxy group-containing vinyl monomers include: epoxy olefins such as glycidyl acrylate, glycidyl methacrylate, monoglycidyl maleate, diglycidyl maleate, monoglycidyl itaconate, diglycidyl itaconate, monoglycidyl allylsuccinate, diglycidyl allylsuccinate, glycidyl p-styrenecarboxylate, allyl glycidyl ether, methallyl glycidyl ether, styrene-p-glycidyl ether, p-glycidyl styrene, 3,4-epoxy-1-butene, and 3,4-epoxy-3-methyl-1-butene; and vinylcyclohexene monoxides. Out of those epoxy group-containing vinyl monomers, glycidyl acrylate and glycidyl methacrylate are preferable due to their easy availability and inexpensiveness. Each of those monomers can be used solely or two or more of those monomers can be used in combination.

An amount in which (b) the at least one kind of monomer, which is selected from the group consisting of the carboxylic acid group-containing vinyl monomers and the epoxy group-containing vinyl monomers, is used is not limited in particular. (b) The at least one kind of monomer is preferably used in an amount of 0.1 parts by weight to 20 parts by weight with respect to 100 parts by weight of (a) the polyolefin-based resin. In a case where the amount of (b) the at least one kind of monomer is less than 0.1 parts by weight, adhesiveness of a resultant resin composition to reinforcing fibers and the metal member is not sufficient. In a case where the amount of (b) the at least one kind of monomer is more than 20 parts by weight, a large number of residual monomers occur, and this adversely affects physical properties of a composite to be obtained.

### <(c) Any other monomer such as an aromatic vinyl compound and a conjugated diene-based compound>

In a case where (a) the polyolefin-based resin and the at least one kind of monomer which is selected from the group consisting of the carboxylic acid group-containing vinyl monomers and the epoxy group-containing vinyl monomers are subjected to graft polymerization, any other monomer can be used, provided that the any other monomer does not prevent the object of the present invention from being attained. Examples of the any other monomer include unsaturated hydroxyl group-containing ethylene compounds, unsaturated amino group-containing ethylene compounds, aromatic vinyl compounds, conjugated diene compounds, vinyl ester compounds, vinyl chloride, and unsaturated oxazoline group-containing monomers. Each of those monomers can be used solely or two or more of those monomers can be used in combination.

### <Aromatic vinyl compound and conjugated diene compound>

In a case where an aromatic vinyl compound or a conjugated diene compound is used as the any other monomer, molecular chain scission is suppressed at the time of graft of such any other monomer onto a molecular chain scission-type polyolefin-based resin such as a polypropylene-based resin. This allows the at least one kind of monomer, which is selected from the group consisting of the carboxylic acid group-containing vinyl monomers and the epoxy group-containing vinyl monomers, to be introduced at a high ratio while a high molecular weight is maintained.

The aromatic vinyl compound can be, for example, one or two or more of the following: styrene; methylstyrenes such as o-methylstyrene, m-methylstyrene, p-methylstyrene, α-methylstyrene, β-methylstyrene, dimethylstyrene, and trimethylstyrene; chlorostyrenes such as o-chlorostyrene, m-chlorostyrene, p-chlorostyrene, α-chlorostyrene, β-chlorostyrene, dichlorostyrene, and trichlorostyrene; bromostyrenes such as o-bromostyrene, m-bromostyrene, p-bromostyrene, dibromostyrene, and tribromostyrene; fluorostyrenes such as o-fluorostyrene, m-fluorostyrene, p-fluorostyrene, difluorostyrene, and trifluorostyrene; nitrostyrenes such as o-nitrostyrene, m-nitrostyrene, p-nitrostyrene, dinitrostyrene, and trinitrostyrene; vinylphenols such as o-hydroxystyrene, m-hydroxystyrene, p-hydroxystyrene, dihydroxystyrene, and trihydroxystyrene; divinylbenzenes such as o-divinylbenzene, m-divinylbenzene, and p-divinylbenzene; diisopropenylbenzenes such as o-diisopropenylbenzene, m-diisopropenylbenzene, and p-diisopropenylbenzene; and the like. Out of those aromatic vinyl compounds, styrene, methylstyrenes such as α-methylstyrene and p-methylstyrene, divinylbenzene monomers, and divinylbenzene isomer mixtures are preferable in terms of inexpensiveness.

Examples of the conjugated diene compound include 1,3-butadiene, 1,3-pentadiene, isoprene, and chloroprene. Out of those conjugated diene compounds, isoprene is preferable in terms of easy handleability due to its liquid state and of inexpensiveness. Each of those conjugated diene compounds can be used solely or two or more of those conjugated diene compounds can be used in combination.

An amount in which at least one kind of compound selected from the group consisting of the aromatic vinyl compounds and the conjugated diene compounds is added is preferably 0.01 parts by weight to 10 parts by weight, and more preferably 0.1 parts by weight to 5 parts by weight, with respect to 100 parts by weight of (a) the polyolefin-based resin. In a case where the amount is excessively small, a graft ratio of the at least one kind of monomer, which is selected from the group consisting of the carboxylic acid group-containing vinyl monomers and the epoxy group-containing vinyl monomers, with respect to the polyolefin-based resin tends to be low. In a case where the amount is more than 10 parts by weight, graft efficiency of the at least one kind of monomer, which is selected from the group consisting of the carboxylic acid group-containing vinyl monomers and the epoxy group-containing vinyl monomers, reaches saturation. It is possible to obtain the modified polyolefin-based resin by heating and thereby reacting (a) the polyolefin-based resin, the at least one kind of monomer which is selected from the group consisting of the carboxylic acid group-containing vinyl monomers and the epoxy group-containing vinyl monomers, and, as necessary, the any other monomer such as an aromatic vinyl compound and a conjugated diene compound, in the presence or absence of the radical polymerization initiator.

### <(d) Radical polymerization initiator>

Examples of (d) the radical polymerization initiator include organic peroxides and azo compounds. (d) The radical polymerization initiator can be, for example, one or two or more of the following organic peroxides: ketone peroxides such as methyl ethyl ketone peroxide and methyl acetoacetate peroxide; peroxy ketals such as 1,1-bis(t-butylperoxy)-3,3,5-trimethylcyclohexane, 1, 1-bis(t-butylperoxy) cyclohexane, n-butyl-4,4-bis(t-butylperoxy)valerate, and 2,2-bis(t-butylperoxy)butane; hydroperoxides such as permethane hydroperoxide, 1,1,3,3-tetramethylbutyl hydroperoxide, diisopropylbenzene hydroperoxide, and cumene hydroperoxide; dialkyl peroxides such as dicumyl peroxide, 2,5-dimethyl-2,5-di(t-butylperoxy)hexane, α,α'-bis(t-butylperoxy-m-isopropyl)benzene, t-butyl cumyl peroxide, di-t-butyl peroxide, and 2,5-dimethyl-2,5-di(t-butylperoxy)hexyne-3; diacyl peroxides such as benzoyl peroxide; peroxydicarbonates such as di(3-methyl-3-methoxybutyl)peroxydicarbonate and di-2-methoxybutyl peroxydicarbonate; peroxy esters such as t-butyl peroxyoctoate, t-butyl peroxyisobutyrate, t-butyl peroxylaurate, t-butyl peroxy-3,5,5-trimethyl hexanoate, t-butyl peroxyisopropylcarbonate, 2,5-dimethyl-2,5-di(benzoylperoxy)hexane, t-butyl peroxyacetate, t-butyl peroxybenzoate, and di-t-butyl peroxyisophthalate; and the like.

An amount in which (d) the radical polymerization initiator is added falls within a range of preferably 0.01 parts by weight to 10 parts by weight, and more preferably 0.2 parts by weight to 5 parts by weight, with respect to 100 parts by weight of (a) the polyolefin-based resin. In a case where the amount is less than 0.01 parts by weight, modification does not progress sufficiently. In a case where the amount is more than 10 parts by weight, flowability and mechanical properties of the modified polyolefin-based resin to be obtained may deteriorate.

### <Method of producing (B) modified polyolefin-based resin by graft polymerization reaction>

A graft polymerization reaction employed in an embodiment of the present invention is not limited in particular, and can be solution polymerization, impregnation polymerization, melt polymerization, or the like. Particularly, melt polymerization is preferable due to its simplicity.

Order and a method of adding the foregoing materials at a time of melt-kneading are preferably as follows. That is, the at least one kind of monomer, which is selected from the group consisting of the carboxylic acid group-containing vinyl monomers and the epoxy group-containing vinyl monomers, and, as necessary, the any other monomer, such as an aromatic vinyl compound and a conjugated diene compound, are added to a mixture obtained by melt-kneading the polyolefin-based resin and the radical polymerization initiator. A resultant mixture is then melt-kneaded. By adding the materials in this order, it is possible to efficiently graft, onto the polyolefin-based resin, the at least one kind of monomer which is selected from the group consisting of the carboxylic acid group-containing vinyl monomers and the epoxy group-containing vinyl monomers, and possible to suppress a deterioration in mechanical physical properties during the modification. In a case where a mixture of the polyolefin-based resin, the radical polymerization initiator, the at least one kind of monomer which is selected from the group consisting the carboxylic acid group-containing vinyl monomers and the epoxy group-containing vinyl monomers, and the any other monomer is collectively introduced into an extruder and is then melt-kneaded, polymerization of such a monomer(s) starts before the polyolefin-based resin is melted, that is, radical active species are sufficiently generated. This tends to cause generation of a low-molecular-weight compound which is composed of such a monomer(s) and which does not contribute to the graft. Note that order and a method of mixing or melt-kneading a material which is added as necessary is not limited in particular.

A heating temperature during the melt-kneading is preferably 100°C to 250°C in that the polyolefin-based resin is sufficiently melted but is not thermally decomposed. Further, a period of time for the melt-kneading (a period of time from a start of mixing of the radical polymerization initiator) is typically 30 seconds to 60 minutes.

As a device used to melt-knead the materials, an extruder, a Banbury mixer, a mill, a kneader, a heating roller, or the like can be used. From the viewpoint of productivity, a single-screw extruder or a twin-screw extruder is preferably used. Note that, in order that the materials are sufficiently uniformly mixed, the melt-kneading can be repeated a plurality of times.

### <Additive>

(A) The polypropylene-based resin and/or (B) the modified polyolefin-based resin in accordance with an embodiment of the present invention can contain, as necessary, a stabilizer(s), such as an antioxidant, a metal deactivator, a phosphorous processing stabilizer, an ultraviolet absorber, an ultraviolet stabilizer, a fluorescent brightening agent, a metallic soap, and/or an antacid absorbent, and/or an additive(s), such as a crosslinking agent, a chain transfer agent, a nucleating agent, a lubricant, a plasticizer, a filler, a reinforcer, a pigment, a dye, a flame retarder, and/or an antistatic agent, provided that the effects of the present invention are not ruined. Those stabilizers and additives can be added to (A) the polypropylene-based resin and/or (B) the modified polyolefin-based resin in advance, can be alternatively added at a time of graft polymerization of the polyolefin-based resin to obtain (B) the modified polyolefin-based resin, or can be alternatively added to (A) the polypropylene-based resin and/or (B) the modified polyolefin-based resin by an appropriate method. Alternatively, those stabilizers and additives can be added at a time of preparing the resin composition containing (A) the polypropylene-based resin and (B) the modified polyolefin-based resin or can be alternatively added, by an appropriate method, to the resin composition containing (A) the polypropylene-based resin and (B) the modified polyolefin-based resin.

### <(C) Another kind of polyolefin resin>

In an embodiment of the present invention, another kind of polyolefin resin can be added to and mixed with the resin composition containing (A) the polypropylene-based resin and (B) the modified polyolefin-based resin, provided that the effects of the present invention are not ruined. Example of (C) the another kind of polyolefin resin which can be mixed with the resin composition include: high-density polyethylene; low-density polyethylene; linear low-density polyethylene; poly-1-butene; polyisobutylene; polymethylpentene; cyclic polyolefins such as a copolymer of cyclopentadiene and ethylene; random copolymers of ethylene and not more than 50% by weight of a vinyl compound such as vinyl acetate, alkyl methacrylate ester, alkyl acrylate ester, and aromatic vinyl; polyolefin-based thermoplastic elastomer block copolymers; and olefin-based thermoplastic elastomers. Each of those polyolefin resins can be used solely or two or more of those polyolefin resins can be used in combination.

### <Resin composition containing (A) polypropylene-based resin and (B) modified polyolefin-based resin>

A weight ratio between (A) the polypropylene-based resin and (B) the modified polyolefin-based resin in the resin composition in accordance with an embodiment of the present invention falls within a range of 90:10 to 40:60, preferably 85:15 to 40:60, and more preferably 80:20 to 40:60. In a case where a weight ratio of the modified polyolefin-based resin (which intends a ratio of a weight of (B) the modified polyolefin-based resin to a total weight of (A) the polypropylene-based resin and (B) the modified polyolefin-based resin) is less than 10% by weight, adhesiveness of the resin composition to the reinforcing fibers and the metal member is not sufficient. This ultimately causes the mechanical strength of the fiber-reinforced composite material to be insufficient, and causes the joining strength, with which the fiber-reinforced composite material is joined to the metal member, to be insufficient. It is considered that in a case where the weight ratio between (A) the polypropylene-based resin and (B) the modified polyolefin-based resin falls within the above range, the adhesiveness of the resin composition to the reinforcing fibers or the metal member is enhanced by interaction, such as Van der Waals force, hydrogen bonding, and covalent bonding, between (i) a carboxylic acid group and/or an epoxy group, each of which is contained in the modified polyolefin-based resin, and (ii) a polar group or a sizing agent, each of which is assumed to be present on a surface of the reinforcing fibers, or the metal member. In a case where the weight ratio of the modified polyolefin-based resin is more than 60% by weight, intrinsic mechanical strength of the polypropylene-based resin is decreased. This ultimately causes the mechanical strength of the fiber-reinforced composite material to be insufficient. It is considered that this is because an increase in a proportion of the modified olefin-based resin causes an ordered structure, such as a crystal structure, of the polypropylene-based resin to be broken. Moreover, this results in use of a large amount of modified polyolefin-based resin, which is relatively expensive, and is not economical.

The resin composition containing the polypropylene-based resin and the modified polyolefin-based resin can be obtained by melt-kneading (A) the polypropylene-based resin, (B) the modified polyolefin-based resin, and, as necessary, the another kind of polyolefin resin. A heating temperature during melt-kneading is preferably 100°C to 250°C in that the polypropylene-based resin and the modified polyolefin-based resin are sufficiently melted but are not thermally decomposed. As a device used to melt-knead those materials, an extruder, a Banbury mixer, a mill, a kneader, a heating roller, or the like can be used. From the viewpoint of productivity, a single-screw extruder or a twin-screw extruder is preferably used. Note that, in order that the materials are sufficiently uniformly mixed, the melt-kneading can be repeated a plurality of times.

A shape of the resin composition containing the polypropylene-based resin and the modified polyolefin-based resin, which resin composition is used to prepare the fiber-reinforced composite material in accordance with an embodiment of the present invention, is not limited in particular. The resin composition is, for example, used in the form of pellets, a film, fibers, a plate, or a powder. A resin content of the fiber-reinforced composite material is typically 15% by weight to 90% by weight, and preferably 20% by weight to 70% by weight.

### <Reinforcing fiber>

The reinforcing fibers used in an embodiment of the present invention are not limited in particular. Examples of the reinforcing fibers include carbon fibers, glass fibers, cellulose fibers, metal fibers, ceramic fibers, polyamide fibers, polyester fibers, polyolefin fibers, and novoloid fibers. Out of those reinforcing fibers, carbon fibers, glass fibers, aramid fibers, and cellulose fibers are preferable. In particular, carbon fibers and glass fibers are preferable. Each of those reinforcing fibers can be used solely or two or more of those reinforcing fibers can be used in combination.

A form of such a fiber material (reinforcing fibers) included in the fiber-reinforced composite material is not limited in particular. Preferable examples of the form include: fabrics in which fibers are arranged in a single direction (UD materials); woven fabrics (woven fabrics in plain weave, twill weave, satin weave, leno weave, mock leno weave, twill weave, double weave, and the like); knitted fabrics; braided fabrics; and non-woven fabrics. Each of those forms can be used solely or two or more of those forms can be used in combination. The reinforcing fibers in an embodiment of the present invention are in the form of a single sheet. For example, such fibers that strips, obtained by cutting the reinforcing fibers into a given length, are dispersed in such a manner that directions of fiber axes are at random in a plane are not included in an embodiment of the present invention.

### <Carbon fiber>

Carbon fibers used in an embodiment of the present invention are a continuous fibrous material whose carbon content falls within a range of 85% by weight to 100% by weight and which at least partially has a graphite structure. Examples of the carbon fibers include, but not particularly limited to, polyacrylonitrile (PAN)-based carbon fibers, rayon-based carbon fibers, lignin-based carbon fibers, and pitch-based carbon fibers. Out of those carbon fibers, PAN-based and pitch-based carbon fibers are preferable in that they are versatile and relatively inexpensive and have high strength. Generally, the carbon fibers are subjected to a sizing treatment. Such carbon fibers can be used as they are. Alternatively, a sizing agent can be removed by organic solvent treatment, heating treatment, or the like, as necessary. Note that the carbon fibers can be arranged such that a fiber bundle is opened with use of air, a roller, or the like in advance and a resin is impregnated between single yarns of the carbon fibers.

### <Method of preparing (I) fiber-reinforced composite material>

A method of preparing (I) the fiber-reinforced composite material composed of the resin composition and the reinforcing fibers is not limited in particular. Examples of the method include: a method in which (i) films of the resin composition are prepared in advance with use of a T-die film extrusion molding machine or the like, (ii) the films and the reinforcing fibers are alternately stacked by a single layer or a plurality of layers, (iii) the resin composition which is in a molten state under a high temperature is pressurized with use of a pressing machine, a laminating machine, an autoclave, or the like so that the resin composition is impregnated into the reinforcing fibers, and (iv) a resultant product is cooled; a method in which (i) prepregs or semipregs of the resin composition and the reinforcing fibers are prepared in advance by an existing method (for example, Patent Literatures 15 and 16), (ii) the prepregs or the semipregs are stacked, (iii) the resin composition which is in a molten state under a high temperature is pressurized with use of a pressing machine, a laminating machine, an autoclave, or the like so that the resin composition is impregnated into the reinforcing fibers, and (iv) a resultant product is cooled; a method in which (i) the resin composition is molded in the form of fibers, (ii) the resin composition in the form of fibers is then formed into a commingled yarn, a micro-braided yarn, non-woven fabrics, or the like together with the reinforcing fibers, (iii) a resultant yarn is processed into a woven fabric, a knitted fabric, or a braided fabric or resultant fabrics are stacked one another, (iv) the resin composition which is in a molten state under a high temperature is pressurized with use of a pressing machine, a laminating machine, an autoclave, or the like so that the resin composition is impregnated into the reinforcing fibers, and (iv) a resultant product is cooled.

In preparing (I) the fiber-reinforced composite material in accordance with an embodiment of the present invention, a temperature at which the resin composition is melted is not limited in particular, provided that the temperature is equal to or higher than a melting point. The temperature is preferably not lower than 200°C, and more preferably not lower than 220°C. A period of time for which the resin composition is melted is not limited in particular, but is preferably not more than 30 minutes, more preferably not more than 20 minutes, and particularly preferably not more than 15 minutes. In a case where the period of time exceeds 30 minutes, the resin composition may be deteriorated by oxidization. The resin composition can be molded under vacuum or an inert gas atmosphere, such as a nitrogen atmosphere, in order that deterioration by oxidization is prevented.

In preparing (I) the fiber-reinforced composite material in accordance with an embodiment of the present invention, a pressure with which the resin composition is impregnated into the reinforcing fibers is preferably not less than 1 MPa, and more preferably not less than 10 MPa.

(I) The fiber-reinforced composite material in accordance with an embodiment of the present invention can be coated, in part or in whole, with a coating material. Typically, after (I) the fiber-reinforced composite material and (II) the metal member are joined and fixed to each other, (I) the fiber-reinforced composite material is coated, in part or in whole, with the coating material. Therefore, it is preferable that a surface of (I) the fiber-reinforced composite material which surface is not joined and fixed to (II) the metal member be coated, in part or in whole, with the coating material. Note, however, that in a case where the surface of (I) the fiber-reinforced composite material is melted and then coated with the coating material as in a condition under which (I) the fiber-reinforced composite material is joined to the metal member (later described), appearance of a resultant coated surface is considerably deteriorated. It is therefore not preferable that the surface of (I) the fiber-reinforced composite material be melted and then coated with the coating material. Therefore, application and curing of the coating material is preferably carried out at a temperature (for example, 50°C to 150°C) much lower than a melting point of modified polyolefin contained in (I) the fiber-reinforced composite material.

The coating material with which (I) the fiber-reinforced composite material is coated is not limited in particular. Examples of the coating material include acrylic resin-based coating materials, urethane resin-based coating materials, alkyd resin-based coating materials, polyester resin-based coating materials, acrylic-urethane resin-based coating materials, acrylic silicone resin-based coating materials, epoxy resin-based coating materials, and urea resin-based coating materials.

A method of coating (I) the fiber-reinforced composite material with the coating material is not limited in particular, and a publicly known method can be employed. Furthermore, (I) the fiber-reinforced composite material can be coated with the coating material without being pretreated. Alternatively, after the surface of (I) the fiber-reinforced composite material is made rough to some extent so that an area of the surface is increased, (I) the fiber-reinforced composite material can be coated with the coating material. Note that a method of making the surface rough is also not limited in particular, and various physical methods, electric methods, and the like can be employed.

It has been difficult so far to coat, with the coating material, (I) the fiber-reinforced composite material composed of the reinforcing fibers and the resin composition which contains (A) the polypropylene-based resin and (B) the modified polyolefin-based resin. However, according to the present invention, adhesiveness to the coating material is excellent. Furthermore, since it is not necessary to melt the modified polyolefin contained in (I) the fiber-reinforced composite material, appearance of (I) the fiber-reinforced composite material is also good.

### <(II) Metal member>

A material of (II) the metal member in accordance with an embodiment of the present invention is not limited in particular. Examples of the material of (II) the metal member include gold, silver, copper, iron, tin, lead, stainless steel, aluminum, a galvalume sheet, magnesium, and titanium. (II) The metal member is made of preferably stainless steel, aluminum, copper, magnesium, or titanium, and particularly preferably stainless steel or aluminum. Each of those materials can be used solely or two or more of those materials can be used in combination.

Even in a case where a roughness degree Ra (arithmetic average roughness) of a surface of (II) the metal member to which surface (I) the fiber-reinforced composite material is joined is not more than 1 pm, (II) the metal member has good adhesiveness to (I) the fiber-reinforced composite material. Note that the roughness degree Ra of the surface of (II) the metal member can be increased by rubbing the surface with use of sandpaper or a powder of diamond or the like. The roughness degree Ra of the surface of (II) the metal member in accordance with the present invention is 0.08 pm to 1 pm, preferably 0.08 pm to less than 1 pm.

### <Method of producing composite in which (I) fiber-reinforced composite material and (II) metal member are joined and fixed to each other>

A method of joining (I) the fiber-reinforced composite material and (II) the metal member to each other so as to prepare the composite in accordance with an embodiment of the present invention, in which composition (I) the fiber-reinforced composite material and (II) the metal member are joined and fixed to each other, is not limited in particular. For example, (I) the fiber-reinforced composite material and (II) the metal member are joined to each other by a publicly known welding means such as heat pressure bonding (pressing) welding, vibration welding, ultrasonic welding, laser welding, electric resistance welding, induction heating welding, or the like. From the viewpoint of efficiency of heating the metal member (easiness of increasing a temperature of the surface of the metal member which surface is joined to the fiber-reinforced composite material), heat pressure bonding (pressing) or laser welding is preferable.

Note that it is possible to directly join (I) the fiber-reinforced composite material and (II) the metal member to each other without the need for an intermediate material such as an adhesive agent and an adhesive film.

### Examples

The following description will discuss the present invention with reference to some Examples. Properties were measured as follows.

### <Joining strength of composite of fiber-reinforced composite material and metal member>

An obtained composite of a fiber-reinforced composite material and a metal member was placed with a metal member side up. The composite was then pulled at a testing rate of 1 mm/minute at 23°C. A load acting at the time of breaking was divided by a joining area so as to determine shear strength. The shear strength was regarded as joining strength.

### <Bending test of fiber-reinforced composite material>

A piece having a size of 100 mm × 15 mm was cut out from a central part of an obtained carbon fiber composite material having a thickness of approximately 1.7 mm. A resultant cut piece was subjected to a bending test with a support-to-support distance of 30 mm, at a testing rate of 2 mm/minutes, and at 23°C.

### <(A) Polypropylene-based resin>

(A1) Block polypropylene J707G (Prime Polypro J707G, tensile modulus: 1.2 GPa, available from Prime Polymer Co., Ltd.)
(A2) VERSIFY 4301 (propylene-ethylene copolymer, tensile modulus: 4.1 MPa, available from Dow)

### <(B) Modified polyolefin-based resin>

(B1) G MA .styrene-modified homopolypropylene used in Production Example 1 and shown in Table 1
(B2) GMA-styrene-modified homopolypropylene used in Production Example 2 and shown in Table 1
(B3) HEMA-styrene-modified homopolypropylene used in Production Example 3 and shown in Table 1
(B4) Maleic acid-modified polypropylene QE-800 (ADMER QE-800, available from Mitsui Chemicals, Inc.)
(a1) Homopolypropylene J106G (Prime Polypro J106G, tensile modulus: 1.6 GPa, available from Prime Polymer Co., Ltd.)
(b1) Glycidyl methacrylate (GMA) (BLEMMER GH, available from NOF CORPORATION)
(b2) 2-hydroxyethyl methacrylate (HEMA) (available from Tokyo Chemical Industry Co., Ltd.)
(c1) Styrene (available from NS Styrene Monomer Kabushiki Kaisha)
(d1) 1,3-di(t-butylperoxyisopropyl)benzene (PERBUTYL P, available from NOF CORPORATION)

### <Production of modified polyolefin-based resin pellets>

### (Production Example 1)

First, 100 parts by weight of (a1) homopolypropylene J106G (Prime Polypro J106G, tensile modulus: 1.6 GPa, available from Prime Polymer Co., Ltd.) and 0.5 parts by weight of (d1) 1,3-di(t-butylperoxyisopropyl)benzene (PERBUTYL P, available from NOF CORPORATION) were fed into a hopper of a twin screw extruder (HK-25D (61D); L/D=61, available from Parker Corporation) set to 200°C, and then melt-kneaded. A mixed solution of 5 parts by weight of (b1) glycidyl methacrylate (GMA) (BLEMMER GH, available from NOF CORPORATION) and 5 parts by weight of (c1) styrene (available from NS Styrene Monomer Kabushiki Kaisha) was then injected at the middle of a cylinder, and a resultant mixture was melt-kneaded. Pellets of (B1) modified homopolypropylene were thus obtained.

### (Production Example 2)

Pellets of (B2) modified homopolypropylene were obtained in a manner similar to that in Production Example 1, except that (i) the amount of (d1) the 1,3-di(t-butylperoxyisopropyl)benzene was changed from 0.5 parts by weight to 0.75 parts by weight, (ii) the amount of the styrene was changed from 5 parts by weight to 7.5 parts by weight, and (iii) the amount of the glycidyl methacrylate was changed from 5 parts by weight to 7.5 parts by weight.

### (Production Example 3)

Pellets of (B3) modified homopolypropylene were obtained in a manner similar to that in Production Example 1, except that 5 parts by weight of the glycidyl methacrylate was changed to 4.5 parts by weight of 2-hydroxyethyl methacrylate (HEMA) (available from Tokyo Chemical Industry Co., Ltd.). Table 1 shows (B) modified polyolefin-based resin pellets thus obtained.

**[Table 1]**

| | | | | Production Example 1 | Production Example 2 | Production Example 3 |
|---|---|---|---|---|---|---|
| | | | | B1 | B2 | B3 |
| (a) | (a1) | Homopolypropylene J106G | Parts by weight | 100 | 100 | 100 |
| (b) | (b1) | Glycidyl methacrylate | Parts by weight | 5 | 7.5 | |
| | (b2) | 2-hydroxyethyl methacrylate | Parts by weight | | | 4.5 |
| (c) | (c1) | Styrene | Parts by weight | 5 | 7.5 | 5 |
| (d) | (d1) | PERBUTYL P | Parts by weight | 0.5 | 0.75 | 0.5 |

### <Production of film>

### (Production Example 4)

Into a hopper of a twin screw extruder (HK-25D; L/D=41, available from Parker Corporation) set to 180°C, 30 parts by weight of the pellets of (B1) the modified polypropylene, which were obtained in Production Example 1, and 70 parts by weight of (A1) block polypropylene J707G (Prime Polypro J707G, tensile modulus: 1.2 GPa, available from Prime Polymer Co., Ltd.) were fed, and then melt-kneaded. Resin composition pellets (P1) were thus obtained. (P1) The resin composition pellets were fed into a T-die film extrusion molding machine (L/D=25, available from Research Laboratory of Plastic Technology Co., Ltd.) to obtain a film (F1) having a thickness of 80 pm.

### (Production Example 5)

(P2) Resin composition pellets and (F2) a film having a thickness of 80 pm were obtained in a manner similar to that in Production Example 4, except that (i) the amount of the pellets of (B1) the modified polypropylene was changed from 30 parts by weight to 50 parts by weight and (ii) the amount of the block polypropylene J707G was changed from 70 parts by weight to 50 parts by weight.

### (Production Example 6)

The pellets (P3) of (B1) the modified homopolypropylene, which were obtained in Production Example 1, were fed into a T-die film extrusion molding machine (L/D=25, available from Research Laboratory of Plastic Technology Co., Ltd.) to obtain a film (F3) having a thickness of 80 pm.

### (Production Example 7)

Resin composition pellets (P4) and a film (F4) having a thickness of 80 pm were obtained in a manner similar to that in Production Example 4, except that 70 parts by weight of (A2) VERSIFY 4301 (propylene-ethylene copolymer, tensile modulus: 4.1 MPa, available from Dow) was used instead of 70 parts by weight of (A1) the block polypropylene J707G.

### (Production Example 8)

Resin composition pellets (P5) and a film (F5) having a thickness of 80 pm were obtained in a manner similar to that in Production Example 4, except that (i) 4 parts by weight of the pellets of (B2) the modified homopolypropylene was used instead of 30 parts by weight of the pellets of (B1) the modified homopolypropylene and (ii) the amount of (A1) the block polypropylene J707G was changed from 70 parts by weight to 96 parts by weight.

### (Production Example 9)

Resin composition pellets (P6) and a film (F6) having a thickness of 80 pm were obtained in a manner similar to that in Production Example 4, except that the pellets of (B2) the modified homopolypropylene were used instead of the pellets of (B1) the modified homopolypropylene.

### (Production Example 10)

Resin composition pellets (P7) and a film (F7) having a thickness of 80 pm were obtained in a manner similar to that in Production Example 4, except that (i) 50 parts by weight of the pellets of (B2) the modified homopolypropylene was used instead of 30 parts by weight of (B1) the modified homopolypropylene and (ii) the amount of (A1) the block polypropylene J707G was changed from 70 parts by weight to 50 parts by weight.

### (Production Example 11)

Resin composition pellets (P8) and a film (F8) having a thickness of 80 pm were obtained in a manner similar to that in Production Example 4, except that the pellets of (B3) the modified homopolypropylene were used instead of the pellets of (B1) the modified homopolypropylene.

### (Production Example 12)

Resin composition pellets (P9) and a film (F9) having a thickness of 80 pm were obtained in a manner similar to that in Production Example 4, except that (i) 4 parts by weight of (B4) maleic acid-modified polypropylene QE-800 (ADMER QE-800, available from Mitsui Chemicals, Inc.) was used instead of 30 parts by weight of the pellets of (B1) the modified homopolypropylene and (ii) the amount of (A1) the block polypropylene J707G was changed from 70 parts by weight to 96 parts by weight.

### (Production Example 13)

Resin composition pellets (P10) and a film (E10) having a thickness of 80 pm were obtained in a manner similar to that in Production Example 4, except that 30 parts by weight of (B4) maleic acid-modified polypropylene QE-800 was used instead of the pellets of (B1) the modified homopolypropylene.

### (Production Example 14)

Resin composition pellets (P11) and a film (F11) having a thickness of 80 pm were obtained in a manner similar to that in Production Example 4, except that (i) 50 parts by weight of (B4) maleic acid-modified polypropylene QE-800 was used instead of 30 parts by weight of the pellets of (B1) the modified homopolypropylene and (ii) the amount of (A1) the block polypropylene J707G was changed from 70 parts by weight to 50 parts by weight.

### (Production Example 15)

Pellets of (A1) the block polypropylene J707G were fed into a T-die film extrusion molding machine to obtain a block polypropylene J707G film (F12) having a thickness of 80 pm.

### <Production of fiber-reinforced composite material>

### (Production Example 16)

Nine 10-cm square carbon fiber plain weave materials (CO6343B, fiber weight: 198 g/m², available from Toray Industries, Inc.) and ten 10-cm square films (F1) prepared in Production Example 4 were alternately stacked so that each of the uppermost film and the lowermost film was a film (F1). A volume content of carbon fibers was 55% according to a trial calculation based on the premise that a density of a resin composition was 0.9 g/cm³ and a density of the carbon fibers was 1.8 g/cm³.

The carbon fiber plain weave materials and the films, which were alternately stacked, were sandwiched from above and below between Teflon (registered trademark) sheets, each of which was a release film, and further sandwiched from above and below between stainless steel plates. A resultant product was placed on a plate of a pressing machine, which plate had been heated to 240°C. After the product was preheated for 10 minutes, the product was pressed for 10 minutes with 15 MPa. The product was then transferred to a pressing machine set to 80°C, and pressed for 10 minutes with 16 MPa. As a result, a carbon fiber-reinforced composite material (I-1) was obtained. The carbon fiber-reinforced composite material (I-1) had a thickness of 1.7 mm.

### (Production Examples 17 through 27)

Carbon fiber composite materials (I-2), (I-3), (I-4), (I-5), (I-6), (I-7), (I-8), (I-9), (I-10), (I-11), and (I-12) were obtained in a manner similar to that in Production Example 16, except that, instead of the films (F1), films (F2), (F3), (F4), (F5), (F6), (F7), (F8), (F9), (F10), (F11), and block polypropylene J707G films (F12) were used, respectively.

### <Production of composite of (I) fiber-reinforced composite material and (II) metal member>

### (Example 1)

A piece having a size of 50 mm × 30 mm was cut out from a central part of the carbon fiber composite material (I-1) obtained in Production Example 16. A resultant cut piece and a stainless steel plate (SUS304, surface roughness Ra = 0.205 pm, available from Kabushiki Kaisha Engineering Test Service) having a size of 50 mm × 25 mm × 2 mm were overlapped so that an end part, having a size of 15 mm × 25 mm, of the stainless steel plate was in contact with the cut piece (see Fig. 1). Subsequently, a resultant product was heated for 10 minutes on a press plate heated to 240°C, pressed for 10 minutes at 240°C with a pressure of 16 MPa from above such a contact part, and then cooled so that the cut piece was jointed to the stainless steel plate. As a result of measuring joining strength, it was found that the joining strength was 8.2 MPa. Similarly, another cut piece of the carbon fiber composite material (I-1) was joined to an aluminum plate (A1050P, surface roughness Ra = 0.294 pm, available from Kabushiki Kaisha Engineering Test Service) having a size of 50 mm × 25 mm × 2 mm. As a result of measuring joining strength, it was found that the joining strength was 6.4 MPa. A flexural modulus and flexural strength of the carbon fiber composite material (I-1) were 59.9 GPa and 497 MPa, respectively.

### (Examples 2 through 6)

Composites of carbon fiber composite materials and stainless steel plates and composites of carbon fiber composite materials and aluminum plates were obtained in a manner similar to that in Example 1, except that carbon fiber composite materials (I-2), (I-6), (I-7), (I-10), and (I-11) were used instead of the carbon fiber composite material (I-1). Joining strength of each composite was measured. Further, flexural modulus and flexural strength of each carbon fiber composite material were measured.

### (Comparative Examples 1 through 6)

Composites of carbon fiber composite materials and stainless steel plates and composites of carbon fiber composite materials and aluminum plates were obtained in a manner similar to that in Example 1, except that carbon fiber composite materials (I-3), (I-4), (I-5), (I-8), (I-9), and (I-12) were used instead of the carbon fiber composite material (I-1). Joining strength of each composite was measured. Further, flexural modulus and flexural strength of each carbon fiber composite material were measured.

### (Example 7)

A piece having a size of 40 mm × 20 mm was cut out from a central part of the carbon fiber composite material (I-2) used in Example 2. A resultant cut piece and a stainless steel plate (SUS304, surface roughness Ra = 0.205 pm, available from Kabushiki Kaisha Engineering Test Service) having a size of 50 mm × 25 mm × 2 mm were overlapped in a manner similar to that in Example 1. Subsequently, a resultant product was irradiated twice with a beam from a laser (YLS-4000, available from IPG) from above such a metal plate (laser output: 0.6 kW, scanning speed: 0.5 m/min, rotational speed: 127 Hz) so that the cut piece was jointed to the stainless steel plate. As a result of measuring joining strength, it was found that the joining strength was 9.8 MPa. Similarly, another cut piece of the carbon fiber composite material (I-2) was joined to an aluminum plate (A1050P, surface roughness Ra = 0.294 pm, available from Kabushiki Kaisha Engineering Test Service) having a size of 50 mm × 25 mm × 2 mm, except that laser output was set to 1.0kW. As a result of measuring joining strength, it was found that the joining strength was 6.3 MPa.

### (Example 8)

A composite of a carbon fiber composite material and a stainless steel plate and a composite of a carbon fiber composite material and an aluminum plate were prepared in a manner similar to that in Example 7, except that the carbon fiber composite material (I-7) was used instead of the carbon fiber composite material (I-2). Joining strength of each composite was measured.

### (Comparative Example 7)

A composite of a carbon fiber composite material and a stainless steel plate and a composite of a carbon fiber composite material and an aluminum plate were prepared in a manner similar to that in Example 7, except that the carbon fiber composite material (I-12) was used instead of the carbon fiber composite material (I-2). However, those metal members did not join to the respective carbon fiber composite materials.

Tables 2 and 3 show results obtained in Examples 1 through 8 and Comparative Examples 1 through 7. In Examples 1 through 8, the flexural modulus of each fiber-reinforced composite material was not less than 50 GPa, and the flexural strength of each fiber-reinforced composite material was not less than 400 MPa. The joining strength with respect to aluminum A1050P was not less than 6 MPa, and the joining strength with respect to stainless steel SUS304 was not less than 8 MPa.

### (Case where modified polyolefin-based resin content is more than 60% by weight)

It was found that the joining strength with respect to each metal member in Comparative Example 1 was at a level equivalent to that in each of Examples, but the flexural modulus and the flexural strength of the fiber-reinforced composite material in Comparative Example 1 were lower than those in each of Examples.

### (Case where tensile modulus of polypropylene-based resin is less than 1 GPa)

It was found that the flexural modulus and the flexural strength of the fiber-reinforced composite material and the joining strength with respect to each metal member in Comparative Example 2 were each lower than those in each of Examples.

### (Case (1) where modified polyolefin-based resin content is less than 10% by weight)

It was found that the flexural modulus of the fiber-reinforced composite material in Comparative Example 3 was equivalent to that in each of Examples but the flexural strength of the fiber-reinforced composite material and the joining strength with respect to each metal member in Comparative Example 3 were each lower than those in each of Examples.

### (Case where modified polyolefin-based resin which was modified with monomer other than carboxylic acid group-containing vinyl monomers and epoxy group-containing vinyl monomers was used)

It was found that the joining strength with respect to stainless steel SUS304 in Comparative Example 4 was at a level equivalent to that in each of Examples, but the flexural modulus and the flexural strength of the fiber-reinforced composite material in Comparative Example 4 were lower than those in each of Examples. In Comparative Example 4, since the aluminum plate did not join to the fiber-reinforced composite material, it was not possible to prepare a composite.

### (Cases (2), (3), and (4) where modified polyolefin-based resin content is less than 10% by weight)

It was also found that the flexural modulus and the flexural strength of the fiber-reinforced composite material and the joining strength with respect to each metal member in each of Comparative Examples 5 through 7 were each lower than those in each of Examples. In each of Comparative Examples 5 through 7, although a composite of a carbon fiber composite material and a stainless steel plate and a composite of a carbon fiber composite material and an aluminum plate were prepared, those metal members did not join to the respective carbon fiber composite materials.

**[Table 2]**

| | | | | | Ex. 1 | Ex. 2 | Ex. 3 | Ex. 4 | Ex. 5 | Ex. 6 |
|---|---|---|---|---|---|---|---|---|---|---|
| Composition of resin composition | (A) Polypropylene-based resin | (A1) | J707G (Tensile modulus 1.2 GPa) | Parts by weight | 70 | 50 | 70 | 50 | 70 | 50 |
| | | (A2) | VERSIFY 4301 (Tensile modulus 4.1 MPa) | Parts by weight | | | | | | |
| | (B) Modified polyolefin-based resin | (B1) | Shown in Production Example 1 (GMA·styrene-modified PP) | Parts by weight | 30 | 50 | | | | |
| | | (B2) | Shown in Production Example 2 (GMA·styrene-modified PP) | Parts by weight | | | 30 | 50 | | |
| | | (B3) | Shown in Production Example 3 (HEMA·styrene-modified PP) | Parts by weight | | | | | | |
| | | (B4) | QE-800 (Maleic acid-modified PP) | Parts by weight | | | | | 30 | 50 |
| | Pellet number | | | | P1 | P2 | P6 | P7 | P10 | P11 |
| | Film number | | | | F1 | F2 | F6 | F7 | F10 | F11 |
| Reinforcing fiber | | | | | Plain weave Carbon fibers | Plain weave Carbon fibers | Plain weave Carbon fibers | Plain weave Carbon fibers | Plain weave Carbon fibers | Plain weave Carbon fibers |
| Evaluation of (I) fiber-reinforced composite material | Number | | | | I-1 | I-2 | I-6 | I-7 | I-10 | I-11 |
| | Fiber-reinforced composite material Flexural properties (23°C) | | Elastic modulus | GPa | 59.9 | 57.4 | 58.7 | 58.9 | 52.6 | 56.5 |
| | | | Strength | MPa | 497 | 458 | 470 | 574 | 427 | 611 |
| Evaluation of composite of (I) and (II) (welded by pressing) | Joining strength (23°C) | | Aluminum plate (A1050P) | MPa | 6.4 | 12.4 | 7.7 | 8.2 | 6.9 | 6.9 |
| | | | Stainless steel plate (SUS304) | MPa | 8.2 | 13.4 | 10.2 | 10.5 | 9.8 | 11.7 |

| | | | | | | | | | | |
|---|---|---|---|---|---|---|---|---|---|---|
| "Ex." is an abbreviation for "Example". | | | | | | | | | | |

**[Table 2] (Continued)**

| | | | | | Com. Ex. 1 | Com. Ex. 2 | Com. Ex. 3 | Com. Ex. 4 | Com. Ex. 5 | Com. Ex. 6 |
|---|---|---|---|---|---|---|---|---|---|---|
| Composition of resin composition | (A) Polypropylene-based resin | (A1) | J707G (Tensile modulus 1.2 GPa) | Parts by weight | | | 96 | 70 | 96 | 100 |
| | | (A2) | VERSIFY 4301 (Tensile modulus 4.1 MPa) | Parts by weight | | 70 | | | | |
| | (B) Modified polyolefin-based resin | (B1) | Shown in Production Example 1 (GMA·styrene-modified PP) | Parts by weight | 100 | 30 | | | | |
| | | (B2) | Shown in Production Example 2 (GMA·styrene-modified PP) | Parts by weight | | | 4 | | | |
| | | (B3) | Shown in Production Example 3 (HEMA·styrene-modified PP) | Parts by weight | | | | 30 | | |
| | | (B4) | QE-800 (Maleic acid-modified PP) | Parts by weight | | | | | 4 | |
| | Pellet number | | | | P3 | P4 | P5 | P8 | P9 | P12 |
| | Film number | | | | F3 | F4 | F5 | F8 | F9 | F12 |
| Reinforcing fiber | | | | | Plain weave Carbon fibers | Plain weave Carbon fibers | Plain weave Carbon fibers | Plain weave Carbon fibers | Plain weave Carbon fibers | Plain weave Carbon fibers |
| Evaluation of (I) fiber-reinforced composite material | Number | | | | I-3 | I-4 | I-5 | I-8 | I-9 | I-12 |
| | Fiber-reinforced composite material Flexural properties (23°C) | | Elastic modulus | GPa | 42.4 | 32.1 | 53.1 | 35.6 | 48.8 | 33.3 |
| | | | Strength | MPa | 322 | 188 | 330 | 383 | 193 | 105 |
| Evaluation of composite of (I) and (II) (welded by pressing) | Joining strength (23°C) | | Aluminum plate (A1050P) | MPa | 6.7 | 5.4 | 2.3 | - | 0 | 0 |
| | | | Stainless steel plate (SUS304) | MPa | 10.8 | 5.1 | 4.8 | 8.8 | 0 | 0 |

| | | | | | | | | | | |
|---|---|---|---|---|---|---|---|---|---|---|
| "Com. Ex." is an abbreviation for "Comparative Example". | | | | | | | | | | |

**Table 3]**

| | | | | | Ex. 7 | Ex. 8 | Com. Ex. 7 |
|---|---|---|---|---|---|---|---|
| Composition of resin composition | (A) Polypropylene-based resin | (A1) | J707G (Tensile modulus 1.2 GPa) | Parts by weight | 50 | 50 | 100 |
| | | (A2) | VERSIFY 4301 (Tensile modulus 4.1 MPa) | Parts by weight | | | |
| | (B) Modified polyolefin-based resin | (B1) | Shown in Production Example 1 (GMA·styrene-modified PP) | Parts by weight | 50 | | |
| | | (B2) | Shown in Production Example 2 (GMA styrene-modified PP) | Parts by weight | | 50 | |
| | | (B3) | Shown in Production Example 3 (HEMA·styrene-modified PP) | Parts by weight | | | |
| | | (B4) | QE-800 (Maleic acid-modified PP) | Parts by weight | | | |
| | Pellet number | | | | P2 | P7 | P12 |
| | Film number | | | | F2 | F7 | F12 |
| Reinforcing fiber | | | | | Plain weave Carbon fibers | Plain weave Carbon fibers | Plain weave Carbon fibers |
| Evaluation of (I) fiber-reinforced composite material | Number | | | | I-2 | I-7 | I-12 |
| | Fiber-reinforced composite material | | Elastic modulus | GPa | 57.4 | 58.9 | 33.3 |
| | Flexural properties (23°C) | | Strength | MPa | 458 | 574 | 105 |
| Evaluation of composite of (I) and (II) (welded by laser) | Joining strength (23°C) | | Aluminum plate (A1050P) | MPa | 6.3 | 7.7 | 0 |
| | | | Stainless steel plate (SUS304) | MPa | 9.8 | 8.6 | 0 |

| | | | | | | | |
|---|---|---|---|---|---|---|---|
| "Ex." is an abbreviation for "Example", and "Com. Ex." is an abbreviation for "Comparative Example". | | | | | | | |

### (Example 9)

A piece having a size of 100 mm × 25 mm was cut out from the carbon fiber-reinforced composite material (I-1) prepared in Production Example 16. A surface of a resultant cut piece was roughened with use of #100 sandpaper, and was wiped clean with use of a KimWipe. The surface was coated with a spray-type acrylic resin-based white coating material (Nippe mini hobby spray, white, available in 100 mL from Nippe Home Products Kabushiki Kaisha), and the cut piece was let stand still for approximately 24 hours at a room temperature. A 5 × 5 grid with 2 mm intervals was formed on such a coated surface with use of a cutter and a super cutter guide available from Taiyu Kizai Kabushiki Kaisha. A cross-cut adhesion test was carried out by (i) attaching an adhesive cellophane tape (specified in JIS Z 1522) to such a grid part and (ii) quickly peeling the adhesive cellophane tape. Table 4 shows results.

### (Example 10)

A cross-cut adhesion test was carried out as in Example 9, except that a cut piece was let stand still for approximately 24 hours at a room temperature and then further heated for 2 hours at 130°C. Table 4 shows results.

### (Example 11)

A cross-cut adhesion test was carried out as in Example 9, except that a surface of a cut piece was coated with a coating material obtained by thinning a solvent type urethane-based coating material, Japanese zelkova color, (available in 120 mL from Washin Paint Co., Ltd.) with use of a paint thinner (thinner for synthetic resin coating materials, available in 100 mL from Asahipen Corporation) so that a ratio between the solvent type urethane-based coating material and the paint thinner was approximately 1:1 (volume ratio), instead of the spray-type acrylic resin-based white coating material. Table 4 shows results.

### (Example 12)

A cross-cut adhesion test was carried out as in Example 11, except that a cut piece was let stand still for approximately 24 hours at a room temperature and then further heated for 2 hours at 130°C. Table 4 shows results.

### (Comparative Example 8)

A cross-cut adhesion test was carried out as in Example 9, except that the carbon fiber-reinforced composite material (I-12) prepared in Production Example 27 was used instead of the carbon fiber-reinforced composite material (I-1). Table 4 shows results.

### (Comparative Example 9)

A cross-cut adhesion test was carried out as in Comparative Example 8, except that a cut piece was let stand still for approximately 24 hours at a room temperature and then further heated for 2 hours at 130°C. Table 4 shows results.

### (Comparative Example 10)

A cross-cut adhesion test was carried out as in Example 11, except that the carbon fiber-reinforced composite material (I-12) prepared in Production Example 27 was used instead of the carbon fiber-reinforced composite material (I-1). Table 4 shows results.

### (Comparative Example 11)

A cross-cut adhesion test was carried out as in Comparative Example 10, except that a cut piece was let stand still for approximately 24 hours at a room temperature and then further heated for 2 hours at 130°C. Table 4 shows results.

**[Table 4]**

| | Fiber-reinforced composite material | Coating material | Curing condition | Remaining (%) | Remarks |
|---|---|---|---|---|---|
| Example 9 | I-1 | Acrylic | Room temperature | 80 | |
| Example 10 | | Acrylic | Room temperature + 130°C/2h | 95 | |
| Example 11 | | Urethane | Room temperature | 80 | |
| Example 12 | | Urethane | Room temperature + 130°C/2h | 100 | |
| Comparative Example 8 | I-12 | Acrylic | Room temperature | 50 | Base material was partially broken. |
| Comparative Example 9 | | Acrylic | Room temperature + 130°C/2h | 80 | Base material was partially broken. |
| Comparative Example 10 | | Urethane | Room temperature | 10 | Base material was partially broken. |
| Comparative Example 11 | | Urethane | Room temperature + 130°C/2h | 50 | Base material was partially broken. |

In Table 4, the item "Remaining (%)" indicates a proportion of an area of a coating film remaining on a coated surface after a cross-cut adhesion test. As shown above, it was clarified that coating film adhesiveness of a coating material of a carbon fiber-reinforced composite material prepared with use of modified polyolefin (Examples 9 through 12) was excellent, as compared with coating film adhesiveness of a carbon fiber-reinforced composite material prepared without use of modified polyolefin (Comparative Examples 8 through 11). Moreover, it was found that, in each of Comparative Examples 8 through 11, a base material (carbon fiber-reinforced composite material) itself, in addition to a coating film, was also destroyed in the cross-cut adhesion test.

## Claims

1. A composite comprising:
(I) a fiber-reinforced composite material which is composed of reinforcing fibers and a resin composition that contains (A) a polypropylene-based resin and (B) a modified polyolefin-based resin; and
(II) a metal member which is joined and fixed to (I) the fiber-reinforced composite material by welding,
(A) the polypropylene-based resin having a tensile modulus of not less than 1 GPa,
(B) the modified polyolefin-based resin being modified with at least one kind of monomer which is selected from the group consisting of carboxylic acid group-containing vinyl monomers and epoxy group-containing vinyl monomers, and modified with a conjugated diene compound in an amount of 0.01 parts by weight to 10 parts by weight with respect to 100 parts by weight of the polyolefin-based resin,
a weight ratio (A):(B) between (A) the polypropylene-based resin and (B) the modified polyolefin-based resin in the resin composition being 90:10 to 40:60, and
the arithmetic average roughness, Ra, of a surface of (II) the metal member to which surface (I) the fiber-reinforced composite material is joined is 0.08 µm to 1 µm.

2. The composite as set forth in claim 1, wherein (B) the modified polyolefin-based resin is a modified polypropylene-based resin.

3. The composite as set forth in claim 1or 2, wherein (II) the metal member is made of any of stainless steel, aluminum, copper, magnesium, and titanium.

4. The composite as set forth in any one of claims 1 through 3, wherein the reinforcing fibers are selected from the group consisting of carbon fibers, glass fibers, aramid fibers, cellulose fibers, and combinations thereof.

5. The composite as set forth in any one of claims 1 through 4, wherein the reinforcing fibers are arranged in a single direction or are in the form of a woven fabric, a knitted fabric, a braided fabric, and a non-woven fabric.

6. The composite as set forth in any one of claims 1 through 5, wherein (I) the fiber-reinforced composite material is coated, in part or in whole, with a coating material.

7. A method of producing a composite including (I) a fiber-reinforced composite material which is composed of reinforcing fibers and a resin composition that contains (A) a polypropylene-based resin and (B) a modified polyolefin-based resin and (II) a metal member which is joined and fixed to (I) the fiber-reinforced composite material by welding,
the method comprising the step of joining (I) the fiber-reinforced composite material and (II) the metal member to each other by heat pressure bonding (pressing) or laser welding,
the composite being arranged such that:
(A) the polypropylene-based resin has a tensile modulus of not less than 1 GPa;
(B) the modified polyolefin-based resin is modified with at least one kind of monomer which is selected from the group consisting of carboxylic acid group-containing vinyl monomers and epoxy group-containing vinyl monomers and with a conjugated diene compound in an amount of 0.01 parts by weight to 10 parts by weight with respect to 100 parts by weight of the polyolefin-based resin; and
a weight ratio (A):(B) between (A) the polypropylene-based resin and (B) the modified polyolefin-based resin in the resin composition is 90:10 to 40:60, and
the arithmetic average roughness, Ra, of a surface of (II) the metal member to which surface (I) the fiber-reinforced composite material is joined is 0.08 µm to 1 µm.

8. The method as set forth in claim 7, further comprising the step of coating (I) the fiber-reinforced composite material, in part or in whole, with a coating material.

## Patentansprüche

1. Verbundstoff, umfassend:
(I) ein faserverstärktes Verbundmaterial, das aus Verstärkungsfasern und einer Harzzusammensetzung besteht, die (A) ein Harz auf Polypropylenbasis und (B) ein modifiziertes Harz auf Polyolefinbasis enthält; und
(II) ein Metallelement, das durch Schweißen mit (I) dem faserverstärkten Verbundmaterial verbunden und daran befestigt ist, wobei
(A) das Harz auf Polypropylenbasis ein Zugmodul von nicht weniger als 1 GPa aufweist,
(B) das modifizierte Harz auf Polyolefinbasis mit mindestens einer Art Monomer modifiziert ist, das ausgewählt ist aus der Gruppe, bestehend aus Carbonsäuregruppen enthaltenden Vinylmonomeren und Epoxygruppen enthaltenden Vinylmonomeren, und mit einer konjugierten Dienverbindung in einer Menge von 0,01 Gewichtsteilen bis 10 Gewichtsteilen, bezogen auf 100 Gewichtsteile des Harzes auf Polyolefinbasis, modifiziert ist;
ein Gewichtsverhältnis (A):(B) zwischen (A) dem Harz auf Polypropylenbasis und (B) dem modifizierten Harz auf Polyolefinbasis in der Harzzusammensetzung 90:10 bis 40:60 beträgt, und
die arithmetische durchschnittliche Rauheit, Ra, einer Oberfläche des (II) Metallelements, mit der die Oberfläche (I) des faserverstärkten Verbundmaterials verbunden ist, 0,08 µm bis 1 µm beträgt.

2. Verbundstoff gemäß Anspruch 1, worin (B) das modifizierte Harz auf Polyolefinbasis ein modifiziertes Harz auf Polypropylenbasis ist.

3. Verbundstoff gemäß Anspruch 1 oder 2, worin (II) das Metallelement aus rostfreiem Stahl, Aluminium, Kupfer, Magnesium oder Titan ist.

4. Verbundstoff gemäß einem der Ansprüche 1 bis 3, worin die Verstärkungsfasern ausgewählt sind aus der Gruppe, bestehend aus Kohlenstofffasern, Glasfasern, Aramidfasern, Cellulosefasern und Kombinationen davon.

5. Verbundstoff gemäß einem der Ansprüche 1 bis 4, worin die Verstärkungsfasern einseitig ausgerichtet sind oder als Gewebe, Gewirke, Geflecht oder Vlies vorliegen.

6. Verbundstoff gemäß einem der Ansprüche 1 bis 5, worin (I) das faserverstärkte Verbundmaterial, teilweise oder vollständig, mit einem Beschichtungsmaterial beschichtet ist.

7. Verfahren zur Herstellung eines Verbundstoffs, der (I) ein faserverstärktes Verbundmaterial, der aus Verstärkungsfasern und einer Harzzusammensetzung besteht, die (A) ein Harz auf Polypropylenbasis und (B) ein modifiziertes Harz auf Polyolefinbasis enthält, und (II) ein Metallelement umfasst, das durch Schweißen mit (I) dem faserverstärkten Verbundmaterial verbunden und daran befestigt ist,
das Verfahren umfassend den Schritt des Verbindens (I) des faserverstärkten Verbundmaterials und (II) des Metallelements miteinander durch Wärmedruckbinden (Pressen) oder Laserschweißen,
wobei das Verbundmaterial so angeordnet ist, dass:
(A) das Harz auf Polypropylenbasis ein Zugmodul von nicht weniger als 1 GPa aufweist;
(B) das modifizierte Harz auf Polyolefinbasis mit mindestens einer Art Monomer modifiziert ist, das ausgewählt ist aus der Gruppe, bestehend aus Carbonsäuregruppen enthaltenden Vinylmonomeren und Epoxygruppen enthaltenden Vinylmonomeren, und mit einer konjugierten Dienverbindung in einer Menge von 0,01 Gewichtsteilen bis 10 Gewichtsteilen, bezogen auf 100 Gewichtsteile des Harzes auf Polyolefinbasis; und
ein Gewichtsverhältnis (A):(B) zwischen (A) dem Harz auf Polypropylenbasis und (B) dem modifizierten Harz auf Polyolefinbasis in der Harzzusammensetzung 90:10 bis 40:60 beträgt, und
die arithmetische durchschnittliche Rauheit, Ra, einer Oberfläche des (II) Metallelements, mit der die Oberfläche (I) des faserverstärkten Verbundmaterials verbunden ist, 0,08 µm bis 1 µm beträgt.

8. Verfahren gemäß Anspruch 7, ferner umfassend den Schritt des Beschichtens (I) des faserverstärkten Verbundmaterials, teilweise oder vollständig, mit einem Beschichtungsmaterial.

## Revendications

1. Composite comprenant :
(I) un matériau composite renforcé de fibres qui est composé de fibres de renforcement et d'une composition de résine qui contient (A) une résine à base de polypropylène et (B) une résine à base de polyoléfine modifiée ; et
(II) un élément métallique qui est lié et fixé au (I) matériau composite renforcé de fibres par soudage,
(A) la résine à base de polypropylène présentant un module d'élasticité à la traction de pas moins de 1 GPa,
(B) la résine à base de polyoléfine modifiée étant modifiée avec au moins un type de monomère qui est sélectionné à partir du groupe consistant en monomères de vinyle contenant un groupe acide carboxylique et monomères de vinyle contenant un groupe époxy, et modifiée avec un composé diène conjugué en une quantité de 0,01 part en poids à 10 parts en poids par rapport à 100 parts en poids de la résine à base de polyoléfine,
un rapport de poids (A):(B) entre (A) la résine à base de polypropylène et (B) la résine à base de polyoléfine modifiée dans la composition de résine étant de 90:10 à 40:60, et
la rugosité moyenne arithmétique, Ra, d'une surface de (II) l'élément métallique, surface à laquelle (I) le matériau composite renforcé de fibres est lié, est de 0,08 µm à 1 µm.

2. Composite selon la revendication 1, dans lequel (B) la résine à base de polyoléfine modifiée est une résine à base de polypropylène modifié.

3. Composite selon la revendication 1 ou la revendication 2, dans lequel (II) l'élément métallique est composé de l'un quelconque parmi l'acier inoxydable, l'aluminium, le cuivre, le magnésium et le titane.

4. Composite selon l'une quelconque des revendications 1 à 3, dans lequel les fibres de renforcement sont sélectionnées dans le groupe consistant en fibres de carbone, fibres de verre, fibres d'aramide, fibres de cellulose, et des combinaisons de celles-ci.

5. Composite selon l'une quelconque des revendications 1 à 4, dans lequel les fibres de renforcement sont agencées dans une seule direction ou sont sous la forme d'un tissu tissé, d'un tissu tricoté, d'un tissu tressé et d'un tissu non tissé.

6. Composite selon l'une quelconque des revendications 1 à 5, dans lequel (I) le matériau composite renforcé de fibres est revêtu, en partie ou en totalité, d'un matériau de revêtement.

7. Procédé de production d'un composite incluant (I) un matériau composite renforcé de fibres qui est composé de fibres de renforcement et d'une composition de résine qui contient (A) une résine à base de polypropylène et (B) une résine à base de polyoléfine modifiée et (II) un élément métallique qui est lié et fixé au (I) matériau composite renforcé de fibres par soudage,
le procédé comprenant l'étape de liaison (I) du matériau composite renforcé de fibres et (II) de l'élément métallique l'un à l'autre par liaison par pression thermique (pressage) ou soudage au laser,
le composite étant agencé de telle sorte que :
(A) la résine à base de polypropylène présente un module de traction de pas moins de 1 GPa ;
(B) la résine à base de polyoléfine modifiée est modifiée avec au moins un type de monomère qui est sélectionné à partir du groupe consistant en monomères de vinyle contenant un groupe acide carboxylique et monomères de vinyle contenant un groupe époxy et avec un composé diène conjugué en une quantité de 0,01 part en poids à 10 parts en poids par rapport à 100 parts en poids de la résine à base de polyoléfine ; et
un rapport de poids (A):(B) entre (A) la résine à base de polypropylène et (B) la résine à base de polyoléfine modifiée dans la composition de résine est de 90:10 à 40:60, et
la rugosité moyenne arithmétique, Ra, d'une surface de (II) l'élément métallique, surface à laquelle (I) le matériau composite renforcé de fibres est lié, est de 0,08 µm à 1 µm.

8. Procédé selon la revendication 7, comprenant en outre l'étape de revêtement (I) du matériau composite renforcé de fibres, en partie ou en totalité, avec un matériau de revêtement.
